(19) **Europäisches Patentamt**
**European Patent Office**
**Office européen des brevets**

(11) **EP 1 299 465 B1**

(12) **FASCICULE DE BREVET EUROPEEN**

(45) Date de publication et mention
de la délivrance du brevet:
**08.02.2012 Bulletin 2012/06**

(51) Int Cl.:
**C08K 3/26** *(2006.01)*      **C08K 3/36** *(2006.01)*
**C08L 23/12** *(2006.01)*

(21) Numéro de dépôt: **01949558.9**

(22) Date de dépôt: **28.06.2001**

(86) Numéro de dépôt international:
**PCT/FR2001/002055**

(87) Numéro de publication internationale:
**WO 2002/002681 (10.01.2002 Gazette 2002/02)**

(54) **COMPOSITIONS POLYMERES AUX PROPRIETES MECANIQUES AMELIOREES**

POLYMERZUSAMMENSETZUNGEN MIT VERBESSERTEN MECHANISCHEN EIGENSCHAFTEN

POLYMER COMPOSITIONS WITH IMPROVED MECHANICAL PROPERTIES

(84) Etats contractants désignés:
**AT BE CH CY DE DK ES FI FR GB GR IE IT LI LU MC NL PT SE TR**

(30) Priorité: **03.07.2000 FR 0008634**

(43) Date de publication de la demande:
**09.04.2003 Bulletin 2003/15**

(73) Titulaire: **Rhodia Operations**
**93306 Aubervilliers (FR)**

(72) Inventeurs:
  • **BOMAL, Yves**
    **F-92300 Levallois-Perret (FR)**
  • **MARCHAND, Jean-Pierre**
    **F-69003 Lyon (FR)**
  • **ORANGE, Gilles**
    **F-95120 Soisy sous Montmorency (FR)**
  • **TUPINIER, Didier**
    **F-93120 La Courneuve (FR)**
  • **VARLET, Joel**
    **F-69570 Dardilly (FR)**

(74) Mandataire: **Delenne, Marc**
**Rhodia Services,**
**Direction de la Propriété Industrielle,**
**40, rue de la Haie-Coq**
**93306 Aubervilliers Cedex (FR)**

(56) Documents cités:
  • **DATABASE WPI Section Ch, Week 199040 Derwent Publications Ltd., London, GB; Class A23, AN 1990-302372 XP002163513 & JP 02 214734 A (TORAY IND INC), 27 août 1990 (1990-08-27)**
  • **DATABASE WPI Section Ch, Week 199147 Derwent Publications Ltd., London, GB; Class A23, AN 1991-342804 XP002163514 & JP 03 199238 A (DAIICHI GOSEN KK), 30 août 1991 (1991-08-30)**
  • **DATABASE WPI Section Ch, Week 199147 Derwent Publications Ltd., London, GB; Class A23, AN 1991-342805 XP002163515 & JP 03 199239 A (DAIICHI GOSEN KK), 30 août 1991 (1991-08-30)**
  • **DATABASE WPI Section Ch, Week 199834 Derwent Publications Ltd., London, GB; Class A23, AN 1998-392325 XP002163516 & JP 10 156937 A (TEIJIN LTD), 16 juin 1998 (1998-06-16)**

EP 1 299 465 B1

**Description**

L'invention concerne des matériaux thermoplastiques aux propriétés mécaniques améliorées, comprenant une matrice et des inclusions. Ces matériaux peuvent notamment être utilisés pour la réalisation d'artides thermoplastiques moulés.

Les propriétés mécaniques et thermomécaniques d'un matériau sont des données essentielles pour la conception d'articles manufacturés. Afin de conférer à un matériau les meilleures propriétés possibles, on cherche souvent à la modifier en utitisant des additifs ou charges convenablement choisies. Cette technique est en particulier utilisée pour la réalisation de matériaux thermoplastiques.

Il est connu d'utiliser des élastomères, dispersés dans une matrice sous forme d'inclusions, pour améliorer la résistance au choc d'un matériau thermoplastique. L'ajout de tels composés détériore le module des compositions. On utillse généralement des élastomères intrinsèquement compatibles avec la matrice, ou compatibilisés soit par greffage de fonctions sur télastomère, soit par utilisation d'un agent de compatibilisation. Les mécanismes de renfort des polymères par des élastomères ont été décrits par notamment Wu (J. Appl. Pol. Sci., vol 35, 5490-561, 1988) puis par Bortczac (Polymer vol 40, 2331-2348, 1999). Ces études enseignent que le renfort est lié à la distance moyenne entre deux inclusions d'élastomères, et qu'il est donc lié à la taille et à la concentration en élastomère dans la matrice.

La possibilité d'améliorer la résistance au choc des polymères thermoplastiques par incorporation dans une matrice d'inclusions minérales, en taille et concentration choisies, est egalement connue.

Il est connu d'utiliser des fibres de verre pour améliorer le module d'un matériau thermoplastique. Les fibres de verre sont des objets de grande taille qui fragilisant considérablement les matériaux. Elles doivent de plus être utilisées en concentrations importantes, de l'ordre de 40%. Par exemple les polyamides comportant des fibres de verre présentent un module élevé, mais un allongement à la rupture faible. Les matériaux obtenus présentent de plus une faible résistance à la fatigue.

Afin d'améliorer le module des matériaux thermoplastiques, des charges de taille beaucoup moins élevées que les fibres ont été proposées. Le brevet FR 1134479 décrit des compositions à base de polyamide 6 contenant des particules de silices de granulométrie 17 à 200 nm. Plus récemment on a décrit des matériaux contenant des particules minérales plaquettaires, par exemple des montmorillonites exfoliées (US 4739007) ou des fluoromicas de synthèse. Ces matériaux présentent un module amélioré, mais une résistance au choc dégradée.

Pour un matériau thermoplastique donné, on constate qu'il existe un compromis entre la résistance au choc et le module, une amélioration de l'un étant généralement réalisée au détriment de l'autre. Les compositions renforcées par de fortes teneurs en fibres de verre présentant quant à elles une amélioration du compromis, mais une diminution des propriétés d'allongement-rupture et de tenue à la fatigue.

La présente invention a pour objet un matériau thermoplastique pour lequel le compromis entre la résilience et le module est fortement amélioré, pour des teneurs relativement faibles en additifs, et/ou pour lequel les propriétés d'allongement-rupture et de tenue à la fatigue sont conservées.

A cet effet l'invention propose un matériau thermoplastique comprenant une matrice constituée de polypropylène et des inclusions dispersées dans la matrice, caractérisé en ce qu'il comporte au moins deux types d'inclusions A et B:

- Inclusions A: inclusions constituées d'un matériau à base de Carbonate de calcium, la plus petite dimension des inclusions étant supérieure à 100 nm, la distance ligamentaire moyenne de matrice entre les inclusions étant inférieure à 1 $\mu$m .
- Inclusions B: inclusions constituées d'un matériau à base de silice, choisies parmi les suivantes:

  - inclusions sensiblement sphériques dont le diamètre moyen est inférieur à 100 nm
  - Inclusions présentant un facteur de forme dont la petite dimension est inférieure à 100 nm
  - Inclusions structurantes constituées d'un groupement de particules minérales élémentaires, la plus grande dimension des particules élémentaires étant inférieure à 100 nm.

Les inclusions sont des composés chimiques dispersés dans la matrice de maniera à en modifier les propriétés. Elles sont d'une nature différente de celle de la matrice.

La matrice constitue de préférence un milieu continu à l'intérieur duquel les inclusions sont englobées. Il est préférable que les inclusions saint suffisamment dispersées.

Les caractéristiques relatives à la forme et aux dimensions des inclusions correspondent à des observations par microscopie électronique à transmission.

On sait que la présence d'inclusion dans une matrice peut induire une modification des propriétés de résistance au choc et de module. Cette modification obéit à un compromis qui peut être représenté par une courbe maîtresse caractéristique de la matrice. Toute variation de l'une ou de l'autre de ces propriétés se fait au détriment de l'autre, sur la courbe maîtresse. De façon surprenante on a trouvé que la matériau selon l'invention présentait une amélioration du compromis module/choc hors de la courbe maîtresse propre au matériau constituant la matrice. On a ainsi observé que la présence simultanée des deux types d'inclusions inclusait des effets additifs ou synergiques, hors de la courbe maîtresse du compromis module/choc.

La matrice est constituée de polypropylène.

Les inclusions A sont dispersées dans la matrice avec une distance ligamentaire moyenne de matrice inférieure à 1 μm. Cette distance est encore plus préférablement inférieure à 0,6 μm. La distance ligamentaire moyenne de matrice est caracteristique de la distance entre les bords de deux inclusions. Cette distance λ est une donnée statistique définie à partir de la forme des inclusions et de la quantité d'inclusions présente dans le matériau. Elle est définie par la formule suivante:

$$\lambda = d \times \left[ \left( \frac{\Pi}{6\Phi} \right)^{\frac{1}{3}} - 1 \right] \times \exp\left[ (\ln \sigma)^2 \right]$$

où

- d est le diamètre moyen équivalent en nombre des inclusions, Par diamètre équivalent d'une particule, on entend son diamètre si elle est sphérique ou sensiblement sphérique, ou le diamètre qu'aurait une inclusion sphérique de même masse.
- $\sigma = E/d$, où E est l'écart type relatif à la distribution en nombre du diamètre des particules
- φ est la traction volumique des inclusions A dans la composition constituée des inclusions B et de la matrice, calculée selon la formule suivante :

$$\Phi = \frac{\left( c/\rho_p \right)}{\left( c/\rho_p \right) + \left( 100 - c/\rho_m \right)}$$

où $\rho_p$ est la masse volumique du corps composant les inclusions A
- $\rho_m$ est la masse volumique d'une composition comprenant la matrice et les inclusions B
- c est le pourcentage en poids des inclusions A dans la composition comprenant la matrice et les inclusions B.

Selon un mode de réalisation les inclusions A sont obtenues par dispersion dans la matrice d'objets individualisés, qui conservent leur taille et leur forme une fois dispersés dans la matrice. Il s'agit par exemple da particules, introduites sous forme de poudre ou de dispersions. Le diamètre moyen équivalent des inclusions, est pris comme celui des particules avant dispersion dans la matrice.

Selon un autre mode de réalisation les inclusions A sont obtenues par dispersion dans la matrice d'une substance non individualisée. Il peut par exempte s'agir de la dispersion d'un élastomère dans la matrice. Le diamètre moyen équivalent des inclusions est alors déterminé par observation au microscope.

Un type de composé convenable pour les inclusions A, est constitué de particules minérales de carbonate de calcium. Les inclusions minérales peuvent être incorporées dans la matrice par exemple par introduction dans le milieu de polymérisation ou par mélange en fondu, éventuellement par l'intermédiaire d'un mélange maître.

Les particules peuvent être sensiblement sphériques ou présenter un faible facteur de forme. Elles peuvent comporter à leur surface un traitement ou dépôt destiné à améliorer la dispersion dans la matrice ou à modifier le comportement interfacial vis-à-vis de la matrice. Il peut par exemple s'agir d'un traitement visant à réduire les interactions entre les particules.

Les particules de carbonate de calcium sont de préférence traitées par un composé comprenant un acide carboxylique à longue chaîne, par exemple l'acide stéarique ou les stéarates d'alcalins ou d'alcalino-terreux.

Les particules minérales utilisées pour les inclusions A présentent avantageusement une distribution de taille unrforme. Les particules sont de préférence sensiblement sphériques avec un diamètre moyen supérieur à 0,1 μm.

Les particules minérales utilisées pour les inclusions A présentent avantageusement une taille moyenne comprise entre 0,2μm et 2μm.

Les inclusions B sont des objets à base de silice dont au moins une dimension est inférieure à 100 nm. Elles peuvent être choisies parmi les inclusions connues pour renforcer le module d'un thermoplastique lorsqu'elle sont dispersées dans ce dernier. Ce sont par exemple des particules minérales rigides, dont le module est supérieur à celui de la matrice.

Les inclusions B présentent une faible taille par rapport aux charges qui sont le plus couramment utilisées pour modifier le module des matériaux, comme par exemple les fibres de verre. Cette caractéristique peut permettre d'en diminuer la quantité, de conserver un aspect de surface intéressant, ou encore de conserver certaines propriétés de la matrice qui peuvent être perdues avec l'utilisation de charges classiques.

Les inclusions B peuvent être choisies parmi plusieurs familles, relatives à leurs formes, structuras et dimensions.

Une première famille regroupe les inclusions isotropes, de forme sphérique ou sensiblement sphérique. Le diamètre de ces inclusions est inférieur à 100 nm.

Une deuxième famille regroupe les inclusions anisotropes, présentant un facteur de forme. Pour les inclusions de cette famille, il est possible de définir au moins une grande dimension et une petite dimension. Par exemple, si les inclusions sont en forme de cylindre, la grande dimension sera définie par la longueur du cylindre et la petite dimension sera définie par le diamètre de la section du cylindre. Si les inclusions sont en forme de plaquettes, la grande dimension sera définie par une dimension caractéristique de la longueur ou du diamètre de la plaquette et la petite dimension sera définie par l'épaisseur de la plaquette. Le facteur de forme, défini par le rapport entre la grande dimension et la petite dimension, peut être faible, par exemple compris entre 1 et 10, ou relativement fort, par exemple supérieur à 10, pouvant atteindre des valeurs de l'ordre de 100 ou plus. La petite dimension est inférieure à 100 nm.

Une troisième famille regroupe les inclusions structurantes. Ces inclusions sont constituées d'un groupement de particules minérales élémentaires, la plus grande dimension desdites particules élémentaires étant inférieure à 100 nm. On préfère les groupements de particules quasi irréversibles, par exemple sous forme d'agrégats. La forme précise du groupement de particules élémentaires est généralement indéterminée. Le groupement est avantageusement configuré en structure ouverte, de manière à ce que la matière constituant la matrice soit présente dans ladite structure ouverte. La groupement peut par exemple être configuré de manière à ce qu'à définisse une cavité, ou un espace concave, la matière constituant la matrice étant présente dans ladite cavité ou ledit espace concave.

De tels groupements dispersés dans la matrice peuvent être obtenus à partir d'agrégats ou d'agglomérats d'un grand nombre de particules élémentaires, de préférence déjà regroupées sous forme d'agrégats. Il peut donc s'agir d'une agglomération d'agrégats. Les agglomérats se dispersent partiellement au cours d'un procédé d'incorporation à la matrice, ou d'un procédé de polymérisation conduisant au polymère constituant la matrice, pour conduire au groupement structurant de particules. Les agrégats ont de préférence une taille inférieure à 200 nm, avec une taille de particules élémentaires inférieure à 25 nm.

La concentration en particules minérales constituant les inclusions B peut être comprise entre 1 et 30 % en poids. Elle est de préférence comprise entre 5 et 10 %.

Comme particules pouvant convenir pour les inclusions B, on cite les particules sensiblement sphériques de silice obtenues par des techniques de précipitation.

Les silices utilisées peuvent par exemple avoir été obtenues par précipitation à partir de silicates alcalin, avec croissance isotrope contrôlée. On cite à titre d'exemple les sols de silice vendus par la société Clariant sous la dénomination Klébosol.

Comme particules pouvant convenir pour les inclusions B, on cite aussi les groupements des particules de silices obtenus par dispersion dans la matrice ou d'agglomérats des particules de silices. Ces derniers sont par exemple obtenus par un procédé de synthèse de silices dit de "précipitation".

Le matériau selon l'invention peut comprendre en plus des additifs ou adjuvants tels que des lubrifiants, des plastifiants, des stabilisants tels que des stabilisants à la chaleur ou à la lumière, des composés utilisés pour la catalyse de la synthèse de la matrice, des antioxydants, des ignifugeants, des antistatiques, des composés bioactifs. La nature des additifs utilisés dépend généralement de la matrice.

Selon l'invention, la matrice est à base de polypropylène, les inclusions A sont à base de carbonate de calcium, et les inclusions B sont à base de silice, sous forme de regroupement de particules élémentaires.

Les particules de carbonate de calcium sont avantageusement traitée par de l'acide stéarique. Le carbonate de calcium peut être obtenu par précipitation ou par broyage de carbonate de calcium naturel.

Les inclusions A selon ce mode de réalisation ont une taille moyenne en nombre comprise entre 0,3 et 3 $\mu$m, de préférence comprise entre 0,3 et 0,9 $\mu$m. La proportion pondérale de ces inclusions dans la matériau est de préférence inférieure à 25 %.

La concentration en particules de carbonate de calcium est de préférence choisie de manière à ce que la distance ligamentaire moyenne soit inférieure à 0,6 $\mu$m.

La silice est présente dans la matrice en concentration comprise entre 1 % et 20 % en poids, de préférence inférieure à 5%. La silice est avantageusement dispersée dans la matrice sous forme d'agrégats de particules élémentaires, avec une taille d'agrégats Inférieure à 200 nm et une taille de particules élémentaires inférieure à 25 nm.

A titre d'exemple on cite les silices dispersibles vendues par la société Rhodia sous les dénominations Tixosil NM61 et Tixosil 365.

Les particules à base de silice et à base de carbonate de calcium sont introduites dans la matrice par mélange en fondu, par exemple à l'aide d'un dispositif d'extrusion. Selon une caradéristique préférentielle, l'extrusion est effectuée sous un cisaillement important, par exemple à l'aide d'un dispositif double vis.

Pour obtenir des dispersions d'inclusions dans une matrice, on peut utilise un produit pour lequel les inclusions sont déjà individualisées, par exemple une poudre de granulométrie sensiblement identique à celle des inclusions dans la matrice ou une dispersion dans un milieu liquide ou un mélange maitre. On peut aussi utiliser un produit précurseur des inclusions ou une combinaison de produits, c'est à dire un produit ou des produits qui donneront lieu à la formation des inclusions dans leur nature, taille et forme définives au cours des procédés d'introduction.

On connait principalement deux types de procédés permettant d'obtenir des dispersions d'inclusions dans la matrice, à partir d'un produit constituant les inclusions ou d'un précurseur.

Des procédés selon le premier type sont appelés procédés d'introduction à la synthèse, Brièvement, ces procédés consistent à introduire les inclusions ou un précurseur des inclusions dans le milieu de polymérisation, avant polymérisation. Par milieu de polymérisation, on entend un milieu contenant les monomères ou oligomères précurseurs du polymère. Un tel procédé peut être particulièrement bien adapté pour introduire un composé sous forme de dispersion dans un liquide.

Des procédés selon le deuxième type sont appelés procédés d'introduction par mélange en fondu. Ces procédés consistent brièvement à mélanger les inclusions ou un précurseur des inclusions avec le matériau constituant la matrice, sous forme fondue. Le mélangeage doit être réalisé de manière à ce que la dispersion des inclusions dans la matrice soit suffisants Le cisaillement observé au cours de l'opération de mélange peut être plus ou moins élevé.

Les procédés d'introduction par mélange en fondu peuvent être mis en oeuvre à l'aide de dispositifs d'extrusion. De tels dispositifs peuvent en outre permettre de contrôler le cisaillement. On cite à titre d'exemple les dispositifs d'extrusion simple-vis et les dispositifs d'extrusion double-vis.

Le composé introduit par mélange en fondu constituant les inclusions ou le précurseur des inclusions peut être présenté sous forme de poudre, de dispersion dans un liquide, de granulés, de mélange maître dans un polymère de même nature que la matrice.

les matériaux selon l'invention peuvent être obtenus par plusieurs procédés. Le choix du procédés d'obtention des compositions peut être fonction de la nature des inclusions à obtenir, de leur forme initiale, et de la matrice choisie.

Selon un premier procédé les deux types d'inclusions sont introduits par des opérations de mélange en fondu. Selon un premier mode de réalisation les inclusions ou précurseurs des inclusions A et B sont introduits au cours d'une même phase de mélange. Selon un deuxième mode de réalisation on introduit successivement chaque type d'inclusions au cours de deux opérations d'extrusion distinctes.

Selon un deuxième procédé les deux types d'inclusions sont introduits par des opérations d'introduction à la synthèse. Par ce procédé las inclusions ou précurseur des deux types sont introduits dans la milieu de polymérisation, avant que la polymérisation ne soit effectuée. Les deux types d'inclusions peuvent être introduits successivement ou en même temps, sous des formes identiques ou différentes.

Selon un troisième procédé les deux types d'inclusions sont Introduites respectivement par un procédé d'introduction à la synthèse puis par un procédé de mélange en fondu. Par un tel procédé on obtient la dispersion des inclusions de type A par introduction à la synthèse puis on obtient la dispersion des inclusions de type B par mélange en fondu, ou l'inverse.

D'autres détails ou avantages de l'invention apparaîtront plus clairement au vu des exemples suivants.

Exemples 1 à 5: matières premières

- Polypropylène : Polypropylène sous forme poudre ELTEX HV P 001P (SOLVAY).
- Antioxydant : IRGANOX B 225
- Carbonate de Calcium : CaCO3 grade 95T traité stéarate (OMYA)
- Silice: Silice Tixosil NM61 (RHODIA)

L'antioxydant est utilisé à 0,2% masse (par rapport au polymère).

Exemple 1 à 5: Mise en oeuvre / mise en forme.

On réalise un malaxage des matières premières selon les proportions pondérales indiquées en tableau I, en malaxeur interne (Brabender) à une température de consigne de 180°C.
Après refroidissement, la produit est granulé, puis mis en forme par thermo-compression (180°C/360bars/ 1 min. - refroidissement sous pression :200°C/min).

Le matériau final est obtenu sous forme de plaques de 4 mm d'épaisseur.

Tableau 1

| | Exemple 1 | Exemple 2 | Exemple 3 comparatif | Exemple 4 comparatif | Exemple 5 comparatif |
|---|---|---|---|---|---|
| Polypropylène plus antioxydant (% en volume) | 93% | 91 % | 100 % | 95 % | 98 % |
| $CaCO_3$ (% en volume) | 5 % | 5 % | / | 5 % | / |
| Silice (% en volume) | 2 % | 4% | / | / | 2 % |

Exemple 1 à 5: Propriétés mécaniques.

Les propriétés mécaniques sont mesurées à température ambiante (23°C), soit en conditions quasi-statique (1 mm/min), soit an condition dynamique (1 m/s).

Le module élastique E et le seuil d'écoulement σy sont détermines par essai de traction sur éprouvette haltère à 1 mm/min.

La résilienoe ou ténacité est mesurée en quasi-statique à 1 mm/min par essai sur éprouvette type CT (40x40x4). Le comportement à la rupture étant non linéaire, il n'a pas été possible d'utiliser les critères de la Mécanique Linéaire de la Rupture.

Le comportement à la rupture a donc été évalué au travers de l'énergie de rupture J, et plus particuliérement la courbe représentant l'énergie dissipée par le matériau lors de la propagation de l'endommagement : courbe J-Δa.

Le protocole utilisé pour cette mesure est décrit dans la norme ASTM E813.

A partir de la courbe J-Δa, il est défini un critère d'amorçage (Jc) et un critère de propagation égal à la pente dJ/dΔa au point Jc. La valeur de Jc est prise pour Δa = 0,2 mm , conformément aux recommandations ESIS.

La tenue au choc est mesurée à 1 m/s par essai sur éprouvette de flexion entaillée ('type Charpy'), via un dispositif de choc vertical instrumenté. La procédure utilisée est conforme aux recommandations ESIS/TC4.

Les résultats en quasi-statiques sont résumés dans le Tableau II.

Tableau II.

| Exemple | E (MPa) | σy (MPa) | Jc (kJ/m$^2$) | dJ/dΔa ($10^3$ kJ/m$^3$) |
|---|---|---|---|---|
| 1 | 1700 | 28 | 20 | 37 |
| 2 | 1600 | 33 | 30 | 65 |
| 3 | 1350 | 28 | 12 | 15 |
| 4 | 1450 | 25,5 | 21 | 46 |
| 5 | 1700 | 28 | 11 | 11 |

Lorsque le taux de silice est augmenté (2% -> 4%), on observe de façon surprenante non pas un gain de module mais une amélioration forte de la ténacité (accroissement de Jc de 50%, et accroissement de dJ/dΔa de plus de 75%).

Les résultats en dynamique sont rapportés dans le tableau III.

Tableau III.

| Exemple | Jc (kJ/m$^2$) | dJ/dΔa ($10^3$ kJ/m$^3$) |
|---|---|---|
| 1 | 5 | 8,25 |
| 3 | 1,25 | 2,75 |
| 4 | 4 | 7 |
| 5 | 1 | 1 0,8 |

En dynamique, les niveaux d'énergie mesurés sont bien plus faibles que ceux obtenus en statique.

Cependant, les écarts observés entre matériau non chargé et matériau chargé se retrouvent.

## Revendications

1.   Matériau thermoplastique comprenant une matrice constituée de polypropylène et des inclusions dispersées dans la matrice, **caractérisé en ce qu'**il comporte au moins deux types d'inclusions A et B :

- Inclusions A : inclusions constituées d'un matériau à base de carbonate de calcium, la plus petite dimension des inclusions étant supérieure à 100 nm, la distance ligamentaire moyenne de matrice entre les inclusions étant inférieure à 1 $\mu$m
- Inclusions B : inclusions constituées d'un matériau à base de silice, choisies parmi les suivantes :

- Inclusions sensiblement sphériques dont le diamètre moyen est inférieur à 100 nm
- Inclusions présentant un facteur de forme dont la petite dimension est inférieure à 100 nm
- Inclusions structurantes constituée d'un groupement de particules minérales élémentaires, la plus grande dimension des particules élémentaires étant inférieure à 100 nm.

## Claims

1.   Thermoplastic material comprising a matrix consisting of polypropylene and inclusions dispersed in the matrix, **characterized in that** it includes at least two types of inclusions A and B :

- inclusions A : inclusions consisting of a calcium carbonate - based material, the smallest dimension of the inclusions being greater than 100 nm, the mean ligamentary distance in the matrix between the inclusions being less than 1 $\mu$m
- inclusions B : inclusions consisting of a silica - based material, chosen from the following :

- approximately spherical inclusions whose mean diameter is less than 100 nm
- inclusions having a form factor whose small dimension is less than 100 nm
- structurizing inclusions consisting of a group of elementary mineral particles, the largest dimension of the elementary particles being less than 100 nm.

## Patentansprüche

1.   Thermoplastisches Material, umfassend eine Matrix, die aus Polypropylen und in der Matrix dispergierten Einschlüssen besteht, **dadurch gekennzeichnet, dass** sie mindestens zwei Arten von Einschlüssen A und B umfasst:

- Einschlüsse A: Einschlüsse, die aus einem Material auf der Basis von Calciumcarbonat bestehen, wobei die kleinste Abmessung der Einschlüsse mehr als 100 nm beträgt, die mittlere Matrix-Banddistanz zwischen den Einschlüssen unterhalb von 1 $\mu$m liegt,
- Einschlüsse B: Einschlüsse, die aus einem Material auf der Basis von Siliciumdioxid bestehen, welche aus den folgenden ausgewählt sind:

- etwa kugelförmigen Einschlüssen, deren mittlerer Durchmesser unterhalb von 100 nm liegt
- Einschlüssen, die einen Formfaktor aufweisen, dessen kleine Abmessung unter 100 nm liegt
- strukturierenden Einschlüssen, die aus einer Gruppe von elementaren mineralischen Teilchen bestehen, wobei die größte Abmessung der elementaren Teilchen unterhalb von 100 nm liegt.

EP 1 299 465 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1134479
- US 4739007 A

**Littérature non-brevet citée dans la description**

- **WU.** *J. Appl. Pol. Sci.,* 1988, vol. 35, 5490-561
- **BORTCZAC.** *Polymer,* 1999, vol. 40, 2331-2348